# EUROPÄISCHE PATENTSCHRIFT

(11) **EP 1 301 544 B1**
(45) Veröffentlichungstag und Bekanntmachung des Hinweises auf die Patenterteilung: **18.03.2009**
(21) Anmeldenummer: 01947456.8
(22) Anmeldetag: 11.07.2001
(51) Int. Cl.: C08F 2/00, B01J 19/00

(54) **VERFAHREN ZUR HERSTELLUNG VON ARRAYS VON N WÄSSRIGEN POLYMERDISPERSIONEN UND M FORMULIERUNGEN WÄSRIGER POLYMERDISPERSIONEN**
PROCESS FOR PREPARING ARRAYS OF N AQUEOUS POLYMER DISPERSIONS AND M FORMULATIONS OF AQUEOUS POLYMER DISPERSIONS
PRODÉDÉ DE FABRICATION DES ENSEMBLES DE N DISPERSIONS POLYMERES AQUEUSES ET DE M FORMULATIONS DE DISPERSIONS POLYMERES AQUEUSES

(30) Priorität: 18.07.2000 DE 10034893
(43) Veröffentlichungstag der Anmeldung: 16.04.2003
(73) Patentinhaber: BASF SE, 67056 Ludwigshafen (DE)
(72) Erfinder: KOLTZENBURG, Sebastian, 67125 Dannstadt-Schauernheim (DE); WULFF, Dirk, 67105 Schifferstadt (DE); RÖCKEL, Harald, Kowloon, Hong-Kong (CN); SCHROF, Wolfgang, 67271 Neuleiningen (DE); ROSSMANITH, Peter, 68199 Mannheim (DE); MÄCHTLE, Walter, 67067 Ludwigshafen (DE)
(74) Vertreter: Isenbruck, Günter
(86) Internationale Anmeldenummer: PCT/EP2001/008007
(87) Internationale Veröffentlichungsnummer: WO 2002/006353

(56) Entgegenhaltungen:
- WO-A-99/52962
- US-A- 5 985 356

## Beschreibung

Die Erfindung betrifft ein Verfahren zur Herstellung eines Arrays von n wäßrigen Polymerdispersionen, ein Verfahren, zur Herstellung eines Arrays von m Formulierungen wäßriger Polymerdispersionen.

Zur Herstellung und Untersuchung von neuen chemischen Verbindungen hat sich neben der klassischen Chemie, die auf die Synthese und Untersuchung einzelner Substanzen gerichtet ist, die sogenannte kombinatorische Chemie entwickelt Diese hat zum Ziel in möglichst kurzer Zeit eine Vielzahl von Substanzen für z. B. pharmakologische Testungen zur Verfügung zu stellen. Systematische Molekülvariationen werden dadurch ermöglicht, daß Reagentien und Synthesebausteine wiederholt genutzt, aber jeweils verschieden verknüpft werden. Um eine Grundstruktur, auch als Templat bezeichnet, werden mehrere möglichst unterschiedliche Substituenten systematisch variiert. Man erhält so eine Substanzbibliothek, ein array, das eine große Anzahl von Verbindungen enthält und über die Verschiedenartigkeit der Strukturcluster diversifiziert ist.

Im mix-and-split-Verfahren wird eine Vielzahl von Edukten stufenweise mit mehreren Reaktanden, jeweils in einer Eintopfreaktion, umgesetzt und danach untersucht, ob das entstandene Reaktionsgemisch die gewünschten Eigenschaften, z. B. eine pharmakologische Wirksamkeit, zeigt Wird eine Wirksamkeit für ein derartiges Reaktionsgemisch gefunden, muß in einem weiteren Schritt ermittelt werden, welche spezielle Substanz im Reaktionsgemisch für die Wirksamkeit verantwortlich ist. Neben dem hohen Aufwand zur Ermittlung der eigentlich aktiven Verbindung ist es zudem schwierig, bei einer Vielzahl von Reaktanden unerwünschte Nebenreaktionen sowie Phantomeffekte in biologischen Testsystemen durch Zusammenwirken mehrerer Verbindungen auszuschließen.

Bei einem anderen Ansatz der kombinatorischen Synthese erfolgt die Synthese einer Vielzahl von Einzelverbindungen durch gezielte Dosierung und Umsetzung einer Reihe von Reaktanden in einer Vielzahl unterschiedlicher Reaktionsgefäße. Dieses Verfahren läßt sich parallel durchführen und automatisieren. Vorzugsweise liegt nach erfolgter Reaktion in jedem einzelnen Reaktionsgefäß ein Umsetzungsprodukt vor, so daß bei gegebener pharmakologischer Wirksamkeit einer Substanz die zu ihrer Herstellung eingesetzten Ausgangsstoffe sofort bekannt sind. Um den Zeitvorteil einer kombinatorischen Synthese optimal ausnutzen zu können, ist es hier dringend erforderlich, schnelle und möglichst parallelisier- und automatisierbare Analytikmethoden zu entwickeln.

Neben ersten Anwendungen dieser spezifischeren kombinatorischen Synthese bei der Suche nach neuen pharmakologisch wirksamen Substanzen und bei der Peptidsynthese erfolgte in jüngster Zeit eine Ausdehnung des Syntheseverfahrens auch auf niedermolekulare organische Verbindungen, organische und anorganische Katalysatoren sowie Polymere.

Zum Gebiet der Polymere gehören auch wäßrige Polymerdispersionen. Wäßrige Polymerdispersionen sind fluide Systeme, die als disperse Phase in wäßrigem Dispergiermedium Polymerteilchen als Polymerknäuel in im wesentlichen stabiler disperser Verteilung befindlich enthalten. Der Durchmesser der Polymerteilchen liegt im allgemeinen überwiegend im Bereich von 0,01 bis 5 µm, häufig überwiegend im Bereich von 0,01 bis 1 µm. Die Stabilität der dispersen Verteilung erstreckt sich oft über einen Zeitraum von ≥ 1 Monat, vielfach sogar über einen Zeitraum von ≥ 3 Monaten. Ihr Polymervolumenanteil beträgt, bezogen auf das Gesamtvolumen der wäßrigen Polymerdispersion, normalerweise 10 bis 70 Vol.-%.

Ebenso wie Polymerlösungen beim Verdampfen des Lösungsmittels, weisen wäßrige Polymerdispersionen beim Verdampfen des wäßrigen Dispergiermediums die Fähigkeit auf, Polymerfilme zu bilden, weshalb wäßrige Polymerdispersionen in vielfacher Weise als Bindemittel, z. B. für Anstrichfarben oder Massen zum Beschichten von Holz, Dächern oder Leder und als Haftklebstoffe, Anwendung finden.

Wäßrige Polymerdispersionen werden also zum Beschichten und Kleben, sowie ferner zum Dichten und Imprägnieren verwendet. Bevorzugt ist ihre Verwendung als Haftklebestoffe mit verbesserter Kohäsion und als Bindemittel für Formkörper oder feinteilige Beschichtungsmassen, die mineralische und/oder organische Substanzen wie Füllstoffe und Pigmente enthalten.

US 5,985,356 beschäftigt sich ganz allgemein mit Methoden und Apparaten zur Herstellung von Arrays auf der Oberfläche eines Substrates, das in n verschiedene Reaktionsorte für n Reaktionsansätze aufgeteilt ist. Die Möglichkeit der Darstellung von Arrays nicht-biologischer, organischer Polymere wird erwähnt. Detailliert wird die radikalische Copolymerisation von Styrol mit Acrylnitril in Toluol bei 60°C beschrieben. Die so erhaltenen Polymere lassen sich z. B. auf ihre Härte hin untersuchen. Nachteilig an den genannten Verfahren ist, daß die Verunreinigung durch Substanzgemische benachbarter Syntheseplätze nicht völlig auszuschließen ist.

WO 99/52962 beschreibt ein Verfahren zur Parallelsynthese einer Sustanzbibliothek von Copolymeren, wobei von mindestens zwei Grundstrukturen strukturell verschiedener Monomere ausgegangen wird. Ausführlich beschrieben wird die Synthese von Copolymeren durch Polykondensation von Dicarbonsäuren mit Diphenolen. Die Polyreaktionen werden sowohl in Suspension, als auch an der Phasengrenzfläche oder in Masse durchgeführt, wobei in Gegenwart oder Abwesenheit von Katalysatoren gearbeitet wird. Neben Polykondensationsreaktionen werden auch radikalische Polymerisationsreaktionen und ionische Polymerisationsreaktionen angewendet.

WO 99/51980 beschreibt unterschiedliche Methoden und Apparate zur raschen Charakterisierung von Polymerbibliotheken. Hierzu werden unter anderem Flüssigchromatographie-Techniken wie die Gelpermeationschromatographie (GPC) vorgeschlagen, die sich zur Untersuchung von flüssigen Polymerproben wie Polymerlösungen, -suspensionen und -emulsionen eignen. Vor allem das Gewichtsmittel der Molmasse M_{w} und das Zahlenmittel der Molmasse Mₙ, die Molmassenverteilung und ihre Breite, ausgedrückt durch das Verhältnis M_{w}/Mₙ, sowie die Polydispersität und der hydrodynamische Radius werden für die Charakterisierung der Polymere herangezogen. Die Untersuchungen erfolgen sowohl parallel als auch seriell. Parallele und serielle Untersuchungsmethoden werden zum Teil auch miteinander kombiniert. Bevorzugt werden nicht-biologische Polymere untersucht. Als Anwendungsbeispiele werden die kombinatorische Polymerforschung und die industrielle Prozeßkontrolle genannt.

Bisher ist die kombinatorische Synthese nicht auf Polymere angewendet worden, die nach dem Emulsionspolymerisationsverfahren hergestellt werden.

Aufgabe der vorliegenden Erfindung ist die Entwicklung einer Methodik, um rasch eine Substanzbibliothek aus wäßrigen Polymerdispersionen herzustellen, und um so eine Optimierung von Polymereigenschaften schneller zu ermöglichen als durch klassische Syntheseverfahren.

Gelöst wird die Aufgabe durch ein Verfahren zur Herstellung eines Arrays von n Polymerdispersionen durch Emulsionspolymerisation in n parallelen Reaktionsansätzen mit den Schritten
(a) Bereitstellen von einem Monomerengemisch bestehend auf 0.5 - 20 Gew.-% mindestens eines hydrophilen Monomers ausgewählt aus der Gruppe bestehend aus Acrylsäure, Methacrylsäure, Maleinsäure, Fumarsäure, Itaconsäure, Acrylamid und Methacrylamid, Vinylsulfonsäure und deren wasserlöslichen Salzen und N-Vinylpyrrolidon, wenigstens 70 Gew.-% mindestens eines Monomers ausgewählt aus der Gruppe bestehend aus Styrol, α-Methylstyrol, o-Chlorstyrol, Vinyltoluole, Vinylacetat, Vinylpropionat, Vinyl-n-butyrat, Vinyllaurat, Vinylstearat, Acrylsäure- und Methacrylsäure-methyl-, -ethyl-, -n-butyl-, -isobutyl-, -2-ethylhexylester, Maleinsäuredimethylester, Maleinsäure-n-butylester, Acrylnitril, 1,3-Butadien und Isopren und 0.5 - 10 Gew.-% mindestens eines Monomers ausgewählt aus der Gruppe bestehend aus N-Methylolacrylamid, N-Methylolmethacrylamid, Ethylenglykolamid, N-Methylolmethacrylamid, Ethylenglykoldiacrylat, 1,3-Butylenglykoldiacrylat, 1,4-Butylenglykoldiacrylat, Propylenglykoldiacrylat, Divinylbenzol, Vinylmethacrylat, Vinylacrylat, Allylmethacrylat, Allylacrylat, Dialkylmaleat, Dialkylfumarat, Methylenbisacrylamid, Cyclopentadienylacrylat, Trialkylcyanurat, n-Hydroxyethyl-, n-Hydroxypropyl-, n-Hydroxy-butylacrylat und - methacrylat, Diacetonacrylamid, Acetylacetoxyethylacrylat- und -methacrylat, wobei die Summe 100 Gew.-% ergibt, einem oder mehreren Initiatoren, einem oder mehreren Dispergiermitteln, Wasser als Reaktionsmedium und gegebenenfalls Reglern, durch die Molmasse verringert wird und/oder Saatpartikel und/oder Farbstoffe und/oder weiteren Komponenten, die nicht miteinpolymerisiert werden an n räumlich getrennten Reaktionsorten für die n Reaktionsansätze,
(b) gleichzeitiges oder aufeinanderfolgendes Reagierenlassen der drei Monomere und gegebenenfalls von Reglern, durch die die Molmasse verringert wird und/oder Saatpartikeln und/oder Farbstoffe und/oder weiteren Komponenten, die nicht miteinpolymerisiert werden, wobei sich jeder der n Reaktionsansätze in mindestens jeweils einem Reaktionsparameter, ausgewählt aus der Gruppe bestehend aus Art und Menge der eingesetzten Monomere, Dispergiermittel, Initiatoren und weiteren geeigneten Komponenten, Menge des Reaktionsmediums, Reaktionstemperatur, Reaktionsdruck, Art der Durchmischung und Art der Durchführung der Polymerisationsreaktion von jedem anderen Reaktionsansatz unterscheidet,
(c) parallele und/oder serielle Charakterisierung der so erhaltenen n Polymerdispersionen,
wobei n eine ganze Zahl größer 1 ist.

Der Vorteil der Erfindung liegt darin, daß sich durch das erfindungsgemäße Verfahren eine große Anzahl von wäßrigen Polymerdispersionen herstellen und charakterisieren läßt. Dies führt zu einer Beschleunigung des Entwicklungsprozesses. Ferner sind durch die Vielzahl von Daten, die dadurch gewonnen werden, Aussagen über Struktur-Eigenschaftsbeziehungen möglich. Ebenso kann der Einfluß von Reaktionsparametern wie Temperatur und Druck schneller untersucht werden.

Der Begriff Emulsionspolymerisation umfaßt sowohl die herkömmliche Emulsionspolymerisation als auch die Miniemulsionspolymerisation. Die Teilchengröße der in der Emulsion vorliegenden Teilchen bei herkömmlicher und Miniemulsionspolymerisation ist ungefähr gleich. Die Teilchen haben typischerweise einen Durchmesser von 200 bis 900 nm haben. Bei einer Miniemulsionspolymerisation findet die Polymerisation in den bereits vorgeformten Monomertröpfchen statt, die nur auspolymerisiert werden. Vorteilhaft ist dieses Verfahren bei Zusatz von Monomeren mit extrem niedriger Wasserlöslichkeit oder anderer nicht copolymerisierbarer öllöslicher Verbindungen, die in den Teilchen miteingeschlossen bleiben.

Das Bereitstellen von drei Monomeren, einem oder mehreren Initiatoren, einem oder mehreren Dispergiermitteln, Wasser als Reaktionsmedium und weiteren Komponenten umfaßt den manuellen oder automatischen Transport der oben genannten Komponenten zu den n Reaktionsorten. In einer bevorzugten Ausführungsform der Erfindung wird ein Dosierroboter eingesetzt. Die Reaktanden können in gasförmiger, fester oder flüssiger Form oder in Lösung dispergiert vorliegen. Bevorzugt ist ein kontinuierlicher Zulauf von Komponenten, wobei dieser Zulauf linear oder nicht linear sein kann.

Die Art und Menge der eingesetzten Monomere ist von der gewünschten Zusammensetzung der wäßrigen Polymerdispersionen und ihre gleichzeitige oder aufeinanderfolgende Bereitstellung von der Art der Reaktionsdurchführung abhängig. Im allgemeinen lassen sich die Monomere sowohl rein als auch als Emulsion zugeben. Die Zugabe als Emulsion ist bevorzugt, d. h die Monomere werden vor Zugabe mit Dispergiermittel in Wasser emulgiert. Üblicherweise werden die Dispergiermittel verdünnt mit Wasser bereitgestellt. Vor ihrem Einsatz werden sie jedoch meist noch weiter mit Wasser verdünnt. Es können auch Mischungen von Dispergiermitteln eingesetzt werden.
In der Regel werden die Monomeren einzeln oder im Gemisch mit Dispergiermittel in Wasser emulgiert. Der oder die Initiatoren werden als Lösung in Wasser oder mit Dispergiermittel in Wasser emulgiert bereitgestellt.

### Monomere

Es werden drei Monomere miteinander umgesetzt: Ein wenigstens eine monoethylenisch ungesättigte Gruppe aufweisendes Monomer, ein im Vergleich dazu erhöhte Wasserlöslichkeit aufweisendes Monomer sowie ein Monomer, das die innere Festigkeit der Verfilmungen der wäßrigen Polymerdispersionen erhöht.

Als wenigstens eine monoethylenisch ungesättigte Gruppe aufweisende Monomere kommen für das erfindungsgemäße Verfahren Styrol, α-Methylstyrol, o-Chlorstyrol oder Vinyltoluole, Vinylacetat, Vinylpropionat, Vinyl-n-butyrat, Vinyllaurat, Vinylstearat, Acrylsäure- und Methacrylsäuremethyl-, -ethyl, -n-butyl, -isobutyl und -2-ethylhexylester, Maleinsäuredimethylester oder Maleinsäure-n-butylester, Acrylnitril, 1,3-Butadien und Isopren in Betracht. In aller Regel weisen diese Monomere in Wasser bei Normalbedingungen (25°C, 1 atm) lediglich eine mäßige bis geringe Löslichkeit auf.

Monomere, die unter den vorgenannten Bedingungen eine erhöhte Wasserlöslichkeit aufweisen, sind Acrylsäure, Methacrylsäure, Maleinsäure, Fumarsäure, Itaconsäure, Acrylamid und Methacrylamid, Vinylsulfonsäure und deren wasserlösliche Salze sowie N-Vinylpyrrolidon.

Die vorgenannten, eine erhöhte Wasserlöslichkeit aufweisenden Monomere werden im Normalfall lediglich als modifizierende Monomere in Mengen, bezogen auf die Gesamtmenge der zu polymerisierenden Monomeren in der Regel von 0,5 bis 20, vorzugsweise von 1 bis 10 Gew.-% miteinpolymerisiert.

Monomere, die üblicherweise die innere Festigkeit der Verfilmungen der wäßrigen Polymerdispersionen erhöhen, sind N-Methylolacrylamid, N-Methylolmethacryl-amid, Ethylenglykoldiacrylat, 1,3-Butylenglykoldiacrylat, 1,4-Butylenglykoldiacrylat, Propylenglykoldiacrylat, Divinylbenzol, Vinylmethacrylat Vinylacrylat, Allylmethacrylat, Allylacrylat, Diallylmaleat, Diallylfumarat, Methylenbisacrylamid, Cyclopentadienylacrylat, Triallylcyanurat, n-Hydroxyethyl-, n-Hydroxypropyl-, n-Hydroxybutylacrylat und - methacrylat, Diacetonacrylamid, Acetylacetoxyethylacrylat und -methacrylat. Die vorgenannten Monomere werden, bezogen auf die Gesamtmenge der zu polymerisierenden Monomeren, in Mengen von 0,5 bis 10 Gew.-% mit einpolymerisiert.

### Initiatoren

Als Initiatoren kommen alle diejenigen Initiatoren in Betracht, die eine radikalische wäßrige Emulsionspolymerisation auslösen können, wie Peroxide und Azoverbindungen. Es können auch Redoxinitiatorsysteme eingesetzt werden. Bevorzugt ist die Verwendung von Peroxodischwefelsäure und/oder deren Alkalimetallsalzen und/oder ihrem Ammoniumsalz. Es können auch Mischungen von Initiatoren verwendet werden. Vorzugsweise beträgt die Menge der eingesetzten radikalischen Initiatorsysteme, bezogen auf die Gesamtmenge der zu polymerisierenden Monomeren, 0,1 bis 2 Gew.-%.

### Dispergiermittel

Üblicherweise werden im Rahmen der radikalischen wäßrigen Emulsionspolymerisation Dispergiermittel mitverwendet, die die Stabilität der erzeugten wäßrigen Polymerdispersion gewährleisten. Als solche kommen sowohl die zur Durchführung von radikalischen wäßrigen Emulsionspolymerisationen üblicherweise eingesetzten Schutzkolloide als auch Emulgatoren oder Mischungen von Schutzkolloiden und/oder Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag Stuttgart, 1961, S. 411-420. Vorzugsweise werden als Dispergiermittel ausschließlich Emulgatoren eingesetzt, deren relative Molekulargewichte im Unterschied zu den Schutzkolloiden üblicherweise unter 1000 liegen. Sie können anionischer, kationischer oder nichtionischer Natur sein. Im Falle der Verwendung von Gemischen grenzflächenaktiver Substanzen müssen die Einzelkomponenten miteinander verträglich sein, was im Zweifelsfall an Hand weniger Vorversuche überprüft werden kann. Im allgemeinen sind anionische und kationische Emulgatoren jeweils untereinander und mit nicht-ionischen Emulgatoren verträglich. Hingegen sind anionische und kationische Emulgatoren meistens miteinander unverträglich. Gebräuchliche Emulgatoren sind z. B.
- ethoxylierte Mono-, Di- und Trialkylphenole mit einem Ethylenoxid-Grad (EO-Grad) von 3 bis 50 Gew.-% und Alkylresten mit 4 bis 9 C-Atomen,
- ethoxylierte Fettalkohole mit einem EO-Grad von 3 bis 50 Gew.-% und Alkylresten mit 8 bis 36 C-Atomen,
- Alkali- und Ammoniumsalze von Alkylsulfaten mit Alkylresten mit 8 bis 12 C-Atomen,
- Alkali- und Ammoniumsalze von Schwefelsäurehalbestern ethoxylierter Alkanole mit einem EO-Grad von 4 bis 30 Gew.-% und Alkylresten von 12 bis 18 C-Atomen,
- Alkali- und Ammoniumsalze von Schwefelsäurehalbestern ethoxylierter Alkylphenole mit einem EO-Grad von 3 bis 50 Gew.-% und Alkylresten mit 4 bis 9 C-Atomen,
- Alkali- und Ammoniumsalze von Alkylsulfonsäuren mit Alkylresten von 12 bis 18 C-Atomen sowie
- Alkali- und Ammoniumsalze von Alkylarylsulfonsäuren mit Alkylresten von 9 bis 18 C-Atomen.
Weitere geeignete Emulgatoren finden sich in Houben-Weyl, Methoden der organischen Chemie, Band XIV/1, Makromolekulare Stoffe, Georg-Thieme-Verlag Stuttgart, 1961, S. 192-208.

Als geeignete grenzflächenaktive Substanzen haben sich ferner Verbindungen der allgemeinen Formel (I) erwiesen, 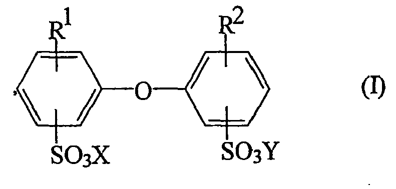 worin R¹ und R² Wasserstoff oder C₄- bis C₂₄-Alkyl bedeuten und nicht gleichzeitig Wasserstoff sind, und X und Y Alkalimetallionen und/oder Ammoniumionen sein können. Vorzugsweise werden die Verbindungen (I) im erfindungsgemäßen Verfahren für sich und besonders bevorzugt im Gemisch mit ethoxylierten Fettalkoholen mit einem EO-Grad von 3 bis 50 Gew.-% und Alkylresten mit 8 bis 36 C-Atomen als Dispergiermittel eingesetzt. Die Verbindungen (I) sind in US-A 4,269,749 beschrieben und im Handel erhältlich.

In der Regel beträgt die Menge an eingesetztem Dispergiermittel 1 bis 3 Gew.-% bezogen auf die radikalisch zu polymerisierenden Monomeren.

Die vorgenannten Dispergiermittel eignen sich ganz generell zur Stabilisierung der erfindungsgemäßen unmittelbaren Verfahrensprodukte. Die erfindungsgemäßen unmittelbaren Verfahrensprodukte umfassen aber auch wäßrige Polymerdispersionen von selbstemulgierenden Polymerisaten, d. h. von Polymerisaten die ionische Gruppen aufweisen, die aufgrund der Abstoßung von Ladungen gleichen Vorzeichens die Stabilisierung zu bewirken vermögen. Bevorzugt weisen die erfindungsgemäßen unmittelbaren Verfahrensprodukte anionische Stabilisierung (insbesondere anionische Dispergiermittel) auf.

### Weitere nützliche Komponenten

Weitere nützliche, für das angewendete Polymerisationsverfahren geeignete Komponenten umfassen beispielsweise
- Regler, durch die die Molmasse verringert wird,
- Farbstoffe,
- Saatpartikel, wie in EP-B2 129 699 und EP-B1 22 633 beschrieben, und
- andere öllösliche Komponenten, die nicht miteinpolymerisiert werden.

Als Regler werden beispielsweise Verbindungen mit einer Thiolgruppe eingesetzt, wie tert-Butylmercaptan, Thioglykolsäure 2-ethylhexylester, Mercaptoethanol, Mercaptopropyltrimethoxysilan oder tert-Dodecylmercaptan. Der Anteil der Regler beträgt bevorzugt 0 bis 0,3 Gew.-%, besonders bevorzugt 0,02 bis 0,3 Gew.-% bezogen auf das Polymerisat.

Erfindungsgemäß zählen zu den öllöslichen Farbstoffen auch organische optische Aufheller, d. h. organische Moleküle mit einem ausgedehnten, konjugierten π-Elektronensystem, das im Unterschied zum π-Elektronensystem konventioneller organischer Farbstoffe keine Strahlung im sichtbaren Bereich sondern ultraviolette Strahlung absorbiert und als bläuliche Fluoreszenz wieder abstrahlt. Durch optische Aufheller wird beispielsweise der Weißgrad von damit behandelten weißen Substraten, wie Papier oder Geweben, erhöht.

Als Saatpartikel werden kleine Polymerkugeln, beispielsweise 0,1 Gew.-% von linearen Polystyrolkugeln, verwendet. Dies ermöglicht eine Kontrolle der Teilchenbildung, wie in EP-B 40 419 und Encyclopedia of Polymer Science and Technology, John Wiley & Sons Inc., New York, 1966, Vol. 5, S. 847 beschrieben. Werden sehr kleine Polymerkugeln mit einem Teilchendurchmesser von 20 bis 30 nm als Keime verwendet, so spricht man von Feinsaatpartikeln.

Beispiele für nicht copolymerisierbare öllösliche Verbindungen sind Poly-n-butylacrylate (z. B. Acronal® A 150 F der BASF AG), Hochtemperaturlösungspolymerisate von n-Butylacrylat (z. B. PnBa), Harze wie Kollophoniumharze, die in Ullmanns Encycl. Techn. Chem. 1976, 4. Auflage, Vol. 12, S. 525-538 beschrieben sind, und Kohlenwasserstoffharze (z. B. Kristalex F 85 der Firma Hercules), die in Encycl. Polym. Sci. Eng. 1987, Vol. 7, S. 758-782 beschrieben sind. Weiter kommen Glycerinester von hochhydrierten Kollophoniumharzen (z. B. Floral ® 85 E der Firma Hercules) und Polystyrole in Betracht, die in C. M. Miller et al, J. Polym. Sci.: Part A: Polym. Chem. 1994, 32, S. 2365-2376 beschrieben sind. Aber auch sonstige wasserunlösliche, öllösliche Substanzen wie aliphatische und aromatische Kohlenwasserstoffe (z. B. Hexadecan), Filmbildhilfsmittel oder Weichmacher wie Gemische von Di-n-butylestem von C₄- bis C₆-Dicarbonsäuren (z. B. Plastilit ® 3060 der BASF AG) können eingesetzt werden.

### Reaktionsorte

Als Reaktionsorte können alle Arten von Reaktionsgefäßen aus Metall, wie Aluminium oder Edelstahl, oder aus Polymeren, wie Teflon oder Polyethylen, oder aus Glas gewählt werden, die sich für die Durchführung einer Emulsionspolymerisation eignen. Die Reaktionen können beispielsweise in den Vertiefungen einer Microtiterplatte (s. WO 99/51980) oder in Glasgefäßen durchgeführt werden.

In einer, bevorzugten Ausführungsform der Erfindung wird ein automatisiertes, parallelisiertes und miniaturisiertes Synthesesystem verwendet, wie es in WO 00/09255 beschrieben ist. In diesem Synthesesystem ist die Durchführung von mehr als 20, bevorzugt von mehr als 100, besonders bevorzugt von mehr als 1000, ganz besonders bevorzugt von mehr als 10000 parallelen automatisierten Reaktionen in sog. Reaktorblöcken möglich. Reaktionsvolumina sind 0,01 µl bis 100 ml, bevorzugt 1 µl bis 100 ml, besonders bevorzugt 0,1 ml bis 100 ml, ganz besonders bevorzugt 1 ml bis 100 ml.

Vorteilhafterweise kann man Doppelmantelgefäße einsetzen, deren Außenmantel mit einem Heizmedium zur Kontrolle der Reaktionstemperatur beschickt werden kann. Die Temperatur des Heizmediums kann durch einen Thermostaten kontrolliert werden. Durch in den Reaktor eingebrachte Kühlfinger kann das Verdampfen flüchtiger Komponenten unterbunden werden, wodurch die Reproduzierbarkeit der Versuche gewährleistet ist.

### Reaktionsdurchführung

Die Reaktion kann auf unterschiedliche Art und Weise durchgeführt werden. Wie die Durchführung erfolgt, wird dabei von der gewünschten Art und der Zusammensetzung der Produkte bestimmt.

Die drei Monomere, der oder die Initiatoren, das oder die Dispergiermittel und gegebenenfalls weitere nützliche, für das angewendete Polymerisationsverfahren geeignete Komponenten kann man gleichzeitig oder aufeinanderfolgend im Reaktionsmedium Wasser miteinander reagieren lassen. Die Reaktion kann einstufig oder mehrstufig durchgeführt werden. Die Monomeren, Initiatoren und Dispergiermittel, die gleich oder verschieden sein können, können entweder gleichzeitig oder nacheinander zugegeben werden. Die Zugabe der Reaktanden kann kontinuierlich, halbkontinuierlich und diskontinuierlich erfolgen, die kontinuierliche Zugabe ist bevorzugt. Bei der diskontinuierlichen Zugabe wird der einzelne Reaktionspartner jeweils auf einmal zugegeben. Kontinuierlich kann der einzelne Reaktand sowohl mit konstanter Zulaufgeschwindigkeit als auch mit gradieller Zulaufgeschwindigkeit zugegeben werden. Der Zeitpunkt, ab dem das Reaktionsgemisch auf die Reaktionstemperatur gebracht wird, ist ebenfalls von der Art der Reaktionsführung abhängig. Auch weitere Arten der Reaktionsführung sind denkbar, dem Fachmann bekannt und fallen unter den Geltungsbereich dieser Erfindung.

Gegebenenfalls können sowohl in der Vorlage als auch im Zulauf weitere nützliche für das Polymerisationsverfahren geeignete Komponenten, wie Saatpartikel, Farbstoffe oder öllösliche Teilchen, vorhanden sein.

In einer Ausführungsform der Erfindung werden als Vorlage alle Monomeren in Wasser mit Dispergiermittel emulgiert vorgelegt und als Zulauf der Initiator mit Dispergiermittel in Wasser zugegeben.

In einer anderen Ausführungsform der Erfindung wird als Vorlage der Initiator mit Dispergiermittel in Wasser vorgelegt und als Zulauf die drei Monomeren mit Dispergiermittel in Wasser emulgiert zugegeben. Die drei Monomeren werden entweder einzeln nacheinander oder als 3 Monomerengemisch zugegeben.

In einer weiteren Ausführungsform der Erfindung wird als Vorlage ein Teil der Monomeren mit Dispergiermittel in Wasser vorgelegt und als Zulauf der Initiator mit den restlichen Monomeren mit Dispergiermittel in Wasser emulgiert zugegeben.

In einer bevorzugten Ausführungsform der Erfindung werden in der Regel 0 bis 50, vorzugsweise 0 bis 30, besonders bevorzugt 0 bis 20 und ganz besonders vorteilhaft 0 bis 10 Gew.-% der Gesamtmenge der Monomeren mit Initiator und Dispergiermittel in Wasser vorgelegt und auf die gewünschte Reaktionstemperatur gebracht. Die überwiegende Menge der zu polymerisierenden Monomeren, in der Regel 50 bis 100, vorzugsweise 70 bis 100, besonders bevorzugt 80 bis 100 und ganz besonders vorteilhaft 90 bis 100 Gew.-% ihrer Gesamtmenge, werden dem Polymerisationsgefäß erst ab Beginn der radikalischen wäßrigen Emulsionspolymerisation gemäß des Fortschreitens der Polymerisation der bereits im Polymerisationsgefäß befindlichen Monomeren zugesetzt. In der Regel erfolgt die Zugabe durch kontinuierliche Zufuhr (in der Regel als reiner Monomerenzulauf oder in wäßriger Phase voremulgiert) und zwar so, daß wenigstens 80, bevorzugt wenigstens 90 und ganz besonders bevorzugt wenigstens 95 Gew.-% der bereits im Polymerisationsgefäß befindlichen Monomeren einpolymerisiert sind.

Läßt man erst ein Monomeres polymerisieren und gibt dann das zweite Monomer zu, so können Pfropfcopolymere erhalten werden, die eine Kern-Schale-Struktur haben, wie Adolf Echte, Handbuch der technischen Polymerchemie, VCH Verlag Weinheim, 1993, S. 339 ff. zu entnehmen ist. Dabei bestimmt die Hydrophilie der eingesetzten Monomere, welches Monomer im Inneren und welches im Äußeren des Pfropfcopolymers eingebaut wird. Je nach Versuchsparametern lassen sich noch weitere Morphologien einstellen, die in S. Kirsch, K. Landfester, O. Shaffer, M. S. El-Aasser, Acta Polym. 1999, 50, 347-362 näher erläutert werden. Die Verfahren zur Herstellung von Propfcopolymeren lassen sich auch nacheinander mit drei Monomeren durchführen.

### Reaktionstemperatur

Die Reaktionstemperatur hängt von der chemischen Natur des Initiatorsystems ab, so daß der gesamte Bereich von 0 bis 100°C bei Arbeiten unter Atmosphärendruck oder unter Unterdruck in Betracht kommt. Bevorzugt sind jedoch Temperaturen von 70 bis 100°C, besonders bevorzugt 80 bis 100°C und ganz besonders bevorzugt 85 bis 100°C. Bei Arbeiten unter erhöhtem Druck kann die Reaktionstemperatur jedoch 100°C übersteigen und bis zu 230°C und mehr betragen.

### Reaktionsdruck

Die Reaktionen können bei Atmosphärendruck, erhöhtem oder vermindertem Druck durchgeführt werden. Im allgemeinen werden die Reaktionen bei 0,01 bis 1000 bar, bevorzugt bei 0,01 bis 200 bar, besonders bevorzugt bei 0,01 bis 50 bar, ganz besonders bevorzugt bei 0,01 bis 15 bar durchgeführt. Leichtflüchtige Monomere wie Ethylen, Butadien oder Vinylchlorid werden bevorzugt unter erhöhtem Druck polymerisiert. Die Copolymerisation von Styrol und Butadien erfolgt bevorzugt bei 0,01 bis 15 bar.

### Art und Weise der Durchmischung

Je nach Art der Reaktionsorte kann die Durchmischung der Reaktionslösung auf unterschiedliche Art und Weise erfolgen. Klassisch erfolgt die Durchmischung durch Rühren mit Magnetrührern.

In dem bereits oben beschriebenen Synthesesystem kann die Durchmischung des Reaktionsmediums beispielsweise durch eine horizontale kreisförmige Schüttelbewegung der Reaktionsgefäße, sog. Vortexen, erfolgen. Durch fest installierte Glasstangen, die in die vortexenden Reaktionsgefäße eingebracht werden und als Strömungsbrecher wirken, kann zusätzlich für eine bessere Durchmischung gesorgt werden.

### Versuchsreihen

In einer Versuchsreihe werden n Reaktionsansätze an n räumlich getrennten Reaktionsorten parallel durchgeführt. Dabei unterscheidet sich jeder der n Reaktionsansätze in mindestens jeweils einem Reaktionsparameter von jedem anderen Reaktionsansatz. Dies erlaubt es, in sehr kurzer Zeit Aussagen über Struktur-Eigenschafts-Beziehungen von Polymeren und den Einfluß von Reaktionsparametern auf die entstandenen n wäßrigen Polymerdispersionen zu gewinnen. Zu den Parametern, die variiert werden können, zählen die Art und Menge der eingesetzten Monomere, der Dispergiermittel, der Initiatoren und weiterer geeigneter Komponenten, die Menge des Reaktionsmediums, die Reaktionstemperatur, der Reaktionsdruck, die Art der Durchmischung, die Art der Durchführung der Polymerisationsreaktion und weitere Parameter wie der gleichzeitige lineare, gleichzeitige nicht-lineare, nacheinander erfolgende lineare oder nacheinander erfolgende nicht-lineare Zulauf von Komponenten, die auf die Eigenschaften der erhaltenen Polymerdispersionen einen Einfluß haben können.

Variiert man beispielsweise die Menge eines Monomers, während man alle anderen Parameter konstant läßt, so kann man untersuchen, wie sich die Eigenschaften der entstandenen n wäßrigen Polymerdispersionen in Abhängigkeit von der Menge des eingebauten Monomers ändern. Ein anderer möglicher Ansatz ist, die Art eines der eingesetzten Monomere zu variieren. Beispielsweise kann man ein oder zwei Monomere konstant lassen, und als drittes Monomer jeweils einen Vertreter einer homologen Reihe einsetzen. Man kann auch ein Monomer sukzessive durch ein anderes ersetzen.

Es ergibt sich so eine sehr große Zahl von Variationsmöglichkeiten, da man auch mehrere Parameter gleichzeitig ändern kann. Man kann z. B. in zehn Reaktionsansätzen die Menge eines Monomers variieren. In den zweiten zehn Reaktionsansätzen kann man nun dieses Monomer durch ein anderes ersetzen, dessen Menge aber in der gleichen Weise variieren, usw. Man hat so in einer Versuchsreihe sowohl die Art als auch die Menge eines Monomers variiert.

Auf dieselbe Art und Weise kann man auch die anderen Reaktanden wie Dispergiermittel, Initiatoren und weitere geeignete Komponenten variieren. Variieren lassen sich auch die Konzentrationen der eingesetzten Reaktanden über die Menge des Reaktionsmediums.

Weitere Möglichkeiten der Kombinatorik sind die Variation der Reaktionstemperatur, des Reaktionsdruckes, der Art der Durchmischung, die Art der Durchführung der Polymerisationsreaktion sowie die Art der Zufuhr der Komponenten. Die Emulsionspolymerisation kann sowohl einstufig als auch mehrstufig, kontinuierlich, halbkontinuierlich sowie diskontinuierlich durchgeführt werden. Auch hier ist es möglich und sinnvoll, innerhalb einer Versuchsreihe mehrere Parameter gleichzeitig zu ändern. Man kann z. B. in 10 Reakionsansätzen die Reaktion einstufig und kontinuierlich durchführen, in weiteren 10 einstufig und diskontinuierlich, in weiteren 10 mehrstufig und kontinuierlich usw.

### Formulierungen von wäßrigen Polymerdispersionen

Die Erfindung umfaßt ebenfalls Verfahren zur Herstellung eines Arrays von m Formulierungen von Polymerdispersionen in m parallelen Ansätzen mit den Schritten
(a) Bereitstellen von jeweils einer wäßrigen Polymerdispersion an m räumlich getrennten Orten für die m Ansätze,
(b) Bereitstellen von jeweils einer weiteren wäßrigen Polymerdispersion und/oder einer weiteren geeigneten Komponente an jedem der m räumlich getrennten Orte,
(c) Vermischen der wäßrigen Polymerdispersionen (a) mit den weiteren wäßrigen Polymerdispersionen (b) und/oder den weiteren Komponenten (b) an den m räumlich getrennten Orten für die m Ansätze, wobei sich jeder der m Ansätze in mindestens jeweils einem Parameter, ausgewählt aus der Gruppe bestehend aus Art und Menge der eingesetzten wäßrigen Polymerdispersionen, Zusammensetzung der eingesetzten wäßrigen Polymerdispersionen, Art und Menge der eingesetzten weiteren geeigneten Komponenten, und weiteren Parametern, die auf die Eigenschaft der erhaltenen Formulierungen von Polymerdispersionen einen Einfluß haben können, von jedem anderen Reaktionsansatz unterscheidet,
(d) parallele und/oder serielle Charakterisierung der so erhaltenen m Formulierungen von Polymerdispersionen auf mindestens eine interessierende Eigenschaft hin,
wobei m eine ganze Zahl größer 1 ist.

Als Formulierungen werden Mischungen von wäßrigen Polymerdispersionen mit anderen Polymerdispersionen und/oder mit weiteren geeigneten Komponenten bezeichnet. Die Art, Anzahl und Menge der eingesetzten wäßrigen Polymerdispersionen und weiteren geeigneten Komponenten ist von der gewünschten Zusammensetzung der Formulierung abhängig. Im allgemeinen werden die weiteren geeigneten Komponenten wie mineralische und organische Substanzen in fester Form zugegeben.

Als wäßrige Polymerdispersionen im erfindungsgemäßen Verfahren werden die wäßrigen Polymerdispersionen, die durch die obenbeschriebenen Emulsionspolymerisationsverfahren herstellbar sind, eingesetzt. In einer bevorzugten Ausführungsform wird eine durch die obengenannten Emulsionspolymerisationsverfahren hergestellte, hinsichtlich ihrer Eigenschaften optimierte und im größeren Maßstab hergestellte wäßrige Polymerdispersion als Standard-Polymer-dispersion für die Formulierungsansätze eingesetzt. Diese wird dann auf die m räumlich getrennten Orte verteilt und beispielsweise mit anderen wäßrigen Polymerdispersionen gemischt. Als andere wäßrige Polymerdispersionen können ebenfalls solche eingesetzt werden, die nach obenbeschriebenen Emulsionspolymerisationsverfahren herstellbar sind. Im allgemeinen wird man zwei oder mehr wäßrige Polymerdispersionen miteinander mischen, die sich hinsichtlich ihrer Zusammensetzung und/oder ihrer Eigenschaften unterscheiden. Beispielsweise wird man eine wäßrige Polymerdispersion, die als Haftklebestoff eingesetzt werden kann, mit einer anderen wäßrigen Polymerdispersion mischen, die eine höhere Festigkeit aufweist, um so eine Mischung mit optimierten Eigenschaften zu erhalten.

Zu den mineralischen und organischen Substanzen, die mit den wäßrigen Polymerdispersionen gemischt werden können, zählen beispielsweise Farbstoffe und Füllstoffe.

Um schnell Formulierungen mit optimierten Eigenschaften zu erhalten, wird man die Versuchsreihen analog zu den Versuchsreihen bei der Emulsionspolymerisation gestalten, d. h. jeder der m räumlich getrennten Ansätze wird sich von den anderen Reaktionsansätzen hinsichtlich eines Parameters unterscheiden, der auf die Eigenschaften der erhaltenen Formulierungen einen Einfluß haben kann. Solche Parameter sind beispielsweise Art und Menge der eingesetzten wäßrigen Polymerdispersionen, die Zusammensetzung der eingesetzten wäßrigen Polymerdispersionen, die Art und Menge der eingesetzten weiteren Komponenten, sowie die Mischungsverhältnisse der einzelnen Bestandteile der Formulierungen untereinander. Auch die Temperatur, bei der gemischt wird, kann einen Einfluß auf die Stabilität und die Eigenschaft der Formulierung haben.

Für die Herstellung eines Arrays gibt es zahlreiche Varianten, je nachdem welcher Parameter geändert wird. Gemeinsam ist diesen Varianten, daß in einer Versuchsreihe zur Herstellung eines Arrays m Ansätze an m räumlich getrennten Reaktionsorten parallel durchgeführt werden. Hierbei kommen die schon bei den Emulsionspolymerisationsverfahren besprochenen Synthesesysteme zum Einsatz. Die rasche Herstellung der unterschiedlichsten Arrays erlaubt es, in sehr kurzer Zeit Eigenschaften wie Klebeverhalten, Festigkeit und Färbevermögen von wäßrigen Polymerdispersionen zu optimieren.

Variiert man beispielsweise die Menge eines Farbstoffs, während man die Menge der wäßrigen Polymerdispersion konstant läßt, so kann man untersuchen, wie sich die Eigenschaften der entstandenen m Formulierungen in Abhängigkeit von der Menge des Farbstoffs ändern. Ein anderer möglicher Ansatz ist, die Art eines der eingesetzten wäßrigen Polymerdispersionen zu variieren. Beispielsweise kann man die Menge an Farbstoff konstant lassen, und diesen jeweils mit einer wäßrigen Polymerdispersion eines anderen Polymers mischen. Man kann auch zwei wäßrige Polymerdispersionen miteinander mischen und dabei sukzessive die eine wäßrige Polymerdispersion durch die andere ersetzen.

In einer Ausführungsform der Erfindung hat man beispielsweise im ersten Ansatz eine Zusammensetzung von 10% wäßriger Polymerdispersion A und 90% wäßriger Polymerdispersion B. In den folgenden Reaktionsansätzen wird die wäßrige Polymerdispersion B dann sukzessive durch die wäßrige Polymerdispersion A ersetzt, so daß man in einem zweiten Reaktionsansatz 20% wäßrige Polymerdispersion A und 80% wäßrige Polymerdispersion B und in einem dritten Reaktionsansatz 30% wäßrige Polymerdispersion A und 70% wäßrige Polymer-dispersion B hat usw.

Man kann auch zwei wäßrige Polymerdispersionen mit einem Farbstoff mischen, dabei die Menge des Farbstoffs konstant lassen und sukzessive die eine wäßrige Polymerdispersion durch die andere ersetzen. Statt eines Farbstoffs oder zusätzlich kann man auch noch andere Komponenten wie Füllstoffe zugeben.

Es ergibt sich eine sehr große Zahl von Variationsmöglichkeiten, da man auch mehrere Parameter gleichzeitig ändern kann. Man kann z. B. in allen m Ansätzen eine konstante Menge wäßrige Polymerdispersion A vorlegen. In den ersten zehn Ansätzen variiert man nun die Menge einer anderen wäßrigen Polymerdispersion B. In den zweiten zehn Ansätzen kann man nun diese wäßrige Polymerdispersion B durch die wäßrige Polymerdispersion C ersetzen, deren Menge aber in der gleichen Weise variieren, usw. Man hat so in einer Versuchsreihe sowohl die Art als auch die Menge einer wäßrigen Polymerdispersion variiert.

Die Zugabe der wäßrigen Polymerdispersionen oder der weiteren geeigneten Komponenten wie Farbstoffe und Füllstoffe erfolgt im allgemeinen diskontinuierlich.

Als Orte, an denen die wäßrigen Polymerdispersionen mit den anderen wäßrigen Polymerdispersionen und/oder weiteren geeigneten Komponenten gemischt werden, können dieselben Orte verwendet werden, die als Reaktionsorte für die obenbeschriebenen Emulsionspolymerisationsverfahren fungierten.

Je nach Art der Orte kann die Durchmischung der Formulierungen auf unterschiedliche Art und Weise erfolgen. Klassisch erfolgt die Durchmischung durch Rühren mit Magnetrührern.

In dem bereits oben beschriebenen Synthesesystem kann die Durchmischung der Formulierungen beispielsweise durch eine horizontale kreisförmige Schüttelbewegung der Reaktionsgefäße, sog. Vortexen, erfolgen. Durch fest installierte Glasstangen, die in die vortexenden Reaktionsgefäße eingebracht werden und als Strömungsbrecher wirken, kann zusätzlich für eine bessere Durchmischung gesorgt werden.

### Parallele und/oder serielle Charakterisierung ganz allgemein

Die durch die erfindungsgemäßen Verfahren herstellbaren n wäßrigen Polymerdispersionen und m Formulierungen von wäßrigen Polymerdispersionen können durch dem Fachmann bekannte Verfahren, wie sie in D. Distler (Herausgeber), Wäßrige Polymerdispersionen: Synthese, Eigenschaften, Anwendungen, Wiley-VCH-Verlag Weinheim, 1999, S. 31-65 beschrieben sind, charakterisiert werden.

### Beispiele

Die nachfolgende Beschreibung von Reaktionsansätzen für Emulsionspolymerisationsverfahren hat beispielhaften Charakter. Variiert wurden hier die Monomerzusammensetzung, die Größe der Ansätze, die Durchmischung der Reaktionslösung sowie die Zugabe der Reaktanden, die entweder diskontinuierlich oder kontinuierlich erfolgte. Dies ermöglichte eine Untersuchung des Einflußes dieser Reaktionsparameter auf die Teilchengröße bzw. deren Verteilung.

Tabelle 1 gibt die Rezepturen für die Beispiele 1 und 3 bis 5 wieder. Als Dispergiermittel wurde der Emulgator Emulphor NPS® der BASF AG eingesetzt. Die Ansätze R1 bis R8 enthielten neben den unten genannten Monomermischungen auch 3706 mg Wasser sowie 194 mg einer 31 gew.-%igen Emulgatorlösung in Wasser.

**Tabelle 1:**

| Reaktor Nr. | Vorlage an Monomeren |
|---|---|
| R1 | 990 mg n-Butylacrylat, 20 mg Acrylsäure 990 mg Styrol |
| R2 | 980 mg n-Butylacrylat, 40 mg Acrylsäure 980 mg Styrol |
| R3 | 970 mg n-Butylacrylat, 60 mg Acrylsäure 970 mg Styrol |
| R4 | 960 mg n-Butylacrylat, 80 mg Acrylsäure 960 mg Styrol |
| R5 | 990 mg n-Butylacrylat, 20 mg Acrylsäure 990 mg Methylmethacrylat, |
| R6 | 980 mg n-Butylacrylat, 40 mg Acrylsäure 980 mg Methylmethacrylat |
| R7 | 970 mg n-Butylacrylat, 60 mg Acrylsäure 970 mg Methylmethacrylat |
| R8 | 960 mg n-Butylacrylat, 80 mg Acrylsäure 960 mg Methylmethacrylat |

### Beispiel 1: Diskontinuierliche Reaktionsdurchführung:

Wasser und Emulgator wurden in den Reaktoren vorgelegt. Die jeweiligen Monomermengen wurden nach Mischung gleichzeitig hinzupipettiert und unter Schütteln in den Reaktoren emulgiert. Die Emulsionen wurden auf 90°C geheizt. Über einen Zeitraum von 120 min lang wurden alle 4 Minuten 33,3 µl der Initiatorlösung bestehend aus 10 mg Natriumpersulfat in 990 mg Wasser zudosiert. Anschließend wurden die Ansätze auf Raumtemperatur abgekühlt.

### Beispiel 2: Diskontinuierliche Reaktionsdurchführung im Laborreaktor:

Die Reaktionen wurden in einem 4 l Glaslaborreaktor, der als Stand der Technik dem Fachmann bekannt ist, mit mehreren geführten Zuläufen durchgeführt. Tabelle 2 gibt die Menge an eingesetzten Monomeren wieder.

**Tabelle 2:**

| D1 | D2 |
|---|---|
| Vorlage: | Vorlage: |
| 196 g n-Butylacrylat 196 g Styrol 8 g Acrylsäure | 194 g n-Butylacrylat 194 g Methylmethacrylat 12 g Acrylsäure |

Die in Tabelle 2 genannten Monomermischungen wurden in einer Mischung aus 741 g Wasser und 39 g einer 31 gew.-%igen Emulgatorlösung in Wasser emulgiert und auf 90°C erhitzt. Die Initiatorlösung (198 g Wasser + 2 g Natriumpersulfat) wurde im Zulaufverfahren innerhalb von 2 Stunden zugegeben. Anschließend wurde 30 min nachpolymerisiert und auf Raumtemperatur abgekühlt.

Die Ergebnisse der Beispiele 1 und 2 sind in Tabelle 3 wiedergegeben. d₅₀ ist hierbei das Zentrifugiermittel der Teilchendurchmesser. Die Dispersionen wurden durch ihre Teilchengrößenverteilung, ermittelt mit der analytischen Ultrazentrifuge (AUZ), charakterisiert. Zu deren Beschreibung sowie der Probenvorbereitung ist W. Mächtle, S. Harding (Hrsg.), AUZ in Biochemistry and Polymer Science, Cambridge, UK, 1991, S. 147-175 und W. Mächtle, Angew. Makromol. Chem. 1988, Vol. 162, S. 35 heranzuziehen.

**Tabelle 3:**

| | | | | | | | | | | |
|---|---|---|---|---|---|---|---|---|---|---|
| Nr. | R1 | R2 | R3 | R4 | R5 | R6 | R7 | R8 | D1 | D2 |
| d₅₀ [nm] | 50 | 45 | 42 | 45 | 49 | 52 | 48 | 57 | 44 | 45 |

Bei diskontinuierlicher Reaktionsdurchführung zeigte sich eine enge Teilchengrößenverteilung, deren Maximum nahezu unabhängig von der Monomerzusammensetzung ist. Zwischen den Teilchengrößenverteilungen der Versuche im Parallelreaktor im 7 ml Maßstab und der Laborversuche im 41-Kessel ist kein signifikanter Unterschied festzustellen. Alle Proben weisen einen kleinen mittleren Teilchendurchmesser auf. Somit eignet sich das verwendete Versuchssystem in hervorragender Weise, um Modelkeaktionen im kleinen, kostengünstigen Maßstab durchzuführen, die dann ohne Probleme auf einen größeren Maßstab übertragen werden können.

### Beispiel 3: Halbkontiniuierliche Reaktionsdurchführung:

In einem Reaktorblock mit sechzehn Reaktoren wurden jeweils Monomer, Initiator und Emulgator in Wasser emulgiert. Jeweils 25 Gew.-% dieser Mischungen wurden dann entnommen, in einem zweiten Reaktorblock mit sechzehn Reaktoren vorgelegt und auf 90°C erwärmt. Die restlichen 75% wurden dann zu dieser Vorlage über einen Zeitraum von 120 min hinzupipettiert.

### Beispiel 4: Halbkontinuierliche Reaktionsdurchführung unter Verwendung von Glasstangen als Strömungsbrechern in den Reaktorblöcken:

Die Durchführung entspricht der des Beispiels 3, allerdings wurden Glasstangen als Strömungsbrecher eingesetzt.

### Beispiel 5: Halbkontinuierliche Reaktionsdurchführung mit Saatzugabe:

Die Durchführung entspricht der des Beispiels 3, allerdings wurden abweichend von der Rezeptur, wie Tabelle 4 zu entnehmen ist, noch 0,1 Gew.-% von linearen Polystyrolkugeln als Saatpartikel in die Vorlage gegeben.

Von je vier Dispersionen aus jedem der drei Versuche wurde erneut die Teilchengrößenverteilung mittels analytischer Ultrazentrifuge bestimmt, wie aus Tabelle 4 ersichtlich. Man erhält enge monomodale Teilchengrößenverteilungen mit einem größeren mittleren Teilchendurchmesser d_{50%} als bei der diskontinuierlichen Reaktionsdurchführung, bei der man Teilchen mit einer Größe von 81 bis 107 nm erhält. Die Teilchengrößenverteilung kann durch den Faktor (d_{90%}-d_{10%})/d_{50%} ausgedrückt werden. Je kleiner dieser Faktor ist, desto enger ist die Teilchengrößenverteilung.

**Tabelle 4:**

| Mischungsverhältnis der Monomeren | Reaktionsdurchführung | d_{50%} [nm] | (d_{90%}-d_{10%})/d_{50%} |
|---|---|---|---|
| 49 n-Butylacrylat 49 Methylmethacrylat 2 Acrylsäure | Zulauf | 106 | 0,22 |
| | Zulauf mit Strömungsbrechern | 88 | 0,28 |
| | Zulauf mit Feinsaatvorlage | 95 | 0,20 |
| 48,5 n-Butylacrylat 48,5 Styrol 3 Acrylsäure | Zulauf | 89 | 0,07 |
| | Zulauf mit Strömungsbrechern | 86 | 0,11 |
| | Zulauf mit Feinsaatvorlage | 86 | 0,10 |

## Patentansprüche

1. Verfahren zur Herstellung eines Arrays von n Polymerdispersionen durch Emulsionspolymerisation in n parallelen Reaktionsansätzen mit den Schritten
(a) Bereitstellen von einem Monomerengemisch bestehend auf 0.5 - 20 Gew.-% mindestens eines hydrophilen Monomers ausgewählt aus der Gruppe bestehend aus Acrylsäure, Methacrylsäure, Maleinsäure, Fumarsäure, Itaconsäure, Acrylamid und Methacrylamid, Vinylsulfonsäure und deren wasserlöslichen Salzen und N-Vinylpyrrolidon, wenigstens 70 Gew.-% mindestens eines Monomers ausgewählt aus der Gruppe bestehend aus Styrol, α-Methylstyrol, o-Chlorstyrol, Vinyltoluole, Vinylacetat, Vinylpropionat, Vinyl-n-butyrat, Vinyllaurat, Vinylstearat, Acrylsäure- und Methacrylsäure-methyl-, -ethyl-, -n-butyl-, -isobutyl-, -2-ethylhexylester, Maleinsäuredimethylester, Maleinsäure-n-butylester, Acrylnitril, 1,3-Butadien und Isopren und 0.5 - 10 Gew.-% mindestens eines Monomers ausgewählt aus der Gruppe bestehend aus N-Methylolacrylamid, N-Methylolmethacrylamid, Ethylenglykolamid, N-Methylolmethacrylamid, Ethylenglykoldiacrylat, 1,3-Butylenglykoldiacrylat, 1,4-Butylenglykoldiacrylat, Propylenglykoldiacrylat, Divinylbenzol, Vinylmethacrylat, Vinylacrylat, Allylmethacrylat, Allylacrylat, Dialkylmaleat, Dialkylfumarat, Methylenbisacrylamid, Cyclopentadienylacrylat, Trialkylcyanurat, n-Hydroxyethyl-, n-Hydroxypropyl-, n-Hydroxy-butylacrylat und -methacrylat, Diacetonacrylamid, Acetylacetoxyethylacrylat- und - methacrylat, wobei die Summe 100 Gew.-% ergibt, einem oder mehreren Initiatoren, einem oder mehreren Dispergiermitteln, Wasser als Reaktionsmedium und gegebenenfalls Reglern, durch die die Molmasse verringert wird und/oder Saatpartikeln und/oder Farbstoffe und/oder weiteren Komponenten, die nicht miteinpolymerisiert werden an n räumlich getrennten Reaktionsorte für die n Reaktionsansätze,
(b) gleichzeitiges oder aufeinanderfolgendes Reagierenlassen der drei Monomere und gegebenenfalls von Reglern, durch die die Molmasse verringert wird und/oder Saatpartikeln und/oder Farbstoffe und/oder weiteren Komponenten, die nicht miteinpolymerisiert werden, wobei sich jeder der n Reaktionsansätze in mindestens jeweils einem Reaktionsparameter, ausgewählt aus der Gruppe bestehend aus Art und Menge der eingesetzten Monomere, Dispergiermittel, Initiatoren und weiteren geeigneten Komponenten, Menge des Reaktionsmediums, Reaktionstemperatur, Reaktionsdruck, Art der Durchmischung und Art der Durchführung der Polymerisationsreaktion von jedem anderen Reaktionsansatz unterscheidet,
(c) parallele und/oder serielle Charakterisierung der so erhaltenen n Polymerdispersionen,
wobei n eine ganze Zahl größer 1 ist.

2. Verfahren nach Anspruch 1, **dadurch gekennzeichnet, daß** die räumlich getrennten Reaktionsorte Vertiefungen in einer Mikrotiterplatte oder Glasgefäße eines parallelisierten Synthesesystems sind.

3. Verfahren nach Anspruch 1 oder 2, **dadurch gekennzeichnet, daß** die Emulsionspolymerisation eine Mini-Emulsionpolymerisation ist.

4. Verfahren nach einem der Ansprüche 1 bis 3, **dadurch gekennzeichnet, daß** die Reaktionsansätze durch horizontale kreisförmige Schüttelbewegung von Reaktionsgefäßen durchmischt werden.

5. Verfahren nach Anspruch 4, **dadurch gekennzeichnet, daß** in die Reaktionsgefäße Glasstangen als Strömungsbrecher eingebracht werden.

6. Verfahren nach einem der Ansprüche 1 bis 5, **dadurch gekennzeichnet, daß** n eine ganze Zahl größer 10 ist.

7. Verfahren nach einem der Ansprüche 1 bis 5, **dadurch gekennzeichnet, daß** n eine ganze Zahl größer 100 ist.

8. Verfahren nach einem der Ansprüche 1 bis 5, **dadurch gekennzeichnet, daß** n eine ganze Zahl größer 1000 ist.

9. Verfahren zur Herstellung eines Arrays von m Formulierungen von Polymerdispersionen in m parallelen Ansätzen mit den Schritten
(a) Bereitstellen von jeweils einer wäßrigen Polymerdispersion, erhalten durch Emulsionspolymerisation wie in Anspruch 1 definiert, an m räumlich getrennten Orten für die m Ansätze,
(b) Bereitstellen von jeweils einer weiteren wäßrigen Polymerdispersion und/oder Farbstoffen und/oder Füllstoffen und/oder weiteren Komponente an jedem der m räumlich getrennten Orte,
(c) Vermischen der wäßrigen Polymerdispersionen (a) mit den weiteren wäßrigen Polymerdispersionen (b) und/oder den Farbstoffen und/oder Füllstoffen und/oder weiteren Komponenten an den m räumlich getrennten Orten für die m Ansätze, wobei sich jeder der m Ansätze in mindestens jeweils einem Parameter, ausgewählt aus der Gruppe bestehend aus Art und Menge der eingesetzten wäßrigen Polymerdispersionen, Zusammensetzung der eingesetzten wäßrigen Polymerdispersionen und Art und Menge der eingesetzten Farbstoffe und/oder Füllstoffe und/oder weiteren geeigneten Komponenten von jedem anderen Reaktionsansatz unterscheidet,
(d) parallele und/oder serielle Charakterisierung der so erhaltenen m Formulierungen von Polymerdispersionen,
wobei m eine ganze Zahl größer 1 ist.

10. Verfahren nach Anspruch 9, **dadurch gekennzeichnet, daß** m eine ganze Zahl größer 10 ist.

11. Verfahren nach Anspruch 9, **dadurch gekennzeichnet, daß** m eine ganze Zahl größer 100 ist.

12. Verfahren nach Anspruch 9, **dadurch gekennzeichnet, daß** m eine ganze Zahl größer 1000 ist

## Claims

1. A process for preparing an array of n polymer dispersions by emulsion polymerization in n parallel reaction mixtures, comprising the steps of
(a) providing a monomer mixture composed of 0.5% - 20% by weight of at least one hydrophilic monomer selected from the group consisting of acrylic acid, methacrylic acid, maleic acid, fumaric acid, itaconic acid, acrylamide and methacrylamide, vinylsulfonic acid and its water-soluble salts, and N-vinylpyrrolidone, at least 70% by weight of at least one monomer selected from the group consisting of styrene, α-methylstyrene, o-chlorostyrene, vinyltoluenes, vinyl acetate, vinyl propionate, vinyl n-butyrate, vinyl laurate, vinyl stearate, methyl, ethyl, n-butyl, isobutyl, and 2-ethylhexyl acrylates and methacrylates, dimethyl maleate, maleic acid n-butyl esters, acrylonitrile, 1,3-butadiene, and isoprene, and 0.5% - 10% by weight of at least one monomer selected from the group consisting of N-methylolacrylamide, N-methylolmethacrylamide, ethylene glycol diacrylate, N-methylolmethacrylamide, 1,3-butylene glycol diacrylate, 1,4-butylene glycol diacrylate, propylene glycol diacrylate, divinylbenzene, vinyl methacrylate, vinyl acrylate, allyl methacrylate, allyl acrylate, dialkyl maleate, dialkyl fumarate, methylenebisacrylamide, cyclopentadienyl acrylate, trialkyl cyanurate, n-hydroxyethyl, n-hydroxypropyl, and n-hydroxybutyl acrylates and methacrylates, diacetoneacrylamide, acetyl-acetoxyethyl acrylate and methacrylate, the sum making 100% by weight, one or more initiators, one or more dispersants, water as reaction medium and, if appropriate, regulators by means of which the molar mass is reduced and/or seed particles and/or dyes and/or other components which are not copolymerized, at n spatially separate reaction sites for the n reaction mixtures,
(b) causing the simultaneous or successive reaction of the three monomers and, if appropriate, of regulators by means of which the molar mass is reduced and/or seed particles and/or dyes and/or other components which are not copolymerized, each of the n reaction mixtures differing from any other reaction mixture in at least one reaction parameter in each case, selected from the group consisting of nature and amount of the monomers, dispersants, initiators and further suitable components used, amount of the reaction medium, reaction temperature, reaction pressure, type of mixing and mode of conduct of the polymerization reaction,
(c) carrying out parallel and/or serial characterization of the resulting n polymer dispersions, n being an integer greater than 1.

2. The process according to claim 1, wherein the spatially separate reaction locations are wells in a microtitre plate or glass vessels of a parallelized synthesis system.

3. The process according to claim 1 or 2, wherein the emulsion polymerization is a miniemulsion polymerization.

4. The process according to any of claims 1 to 3, wherein the reaction mixtures are mixed by means of horizontal circular shaking motion of reaction vessels.

5. The process according to claim 4, wherein glass rods are installed as flow disruptors in the reaction vessels.

6. The process according to any of claims 1 to 5, wherein n is an integer greater than 10.

7. The process according to any of claims 1 to 5, wherein n is an integer greater than 100.

8. The process according to any of claims 1 to 5, wherein n is an integer greater than 1000.

9. A process for preparing an array of m formulations of polymer dispersions in m parallel mixtures, comprising the steps of
(a) providing in each case one aqueous polymer dispersion, obtained by emulsion polymerization as defined in claim 1, to m spatially separate sites for the m mixtures,
(b) providing in each case one further aqueous polymer dispersion and/or dyes and/or fillers and/or a further component to each of the m spatially separate sites,
(c) mixing the aqueous polymer dispersions (a) with the further aqueous polymer dispersions (b) and/or the dyes and/or fillers and/or further components at the m spatially separate sites for the m mixtures, each of the m mixtures differing from every other reaction mixture in at least one parameter in each case, selected from the group consisting of nature and amount of the aqueous polymer dispersions used, composition of the aqueous polymer dispersions used and nature and amount of the dyes and/or fillers and/or further suitable components used,
(d) parallel and/or serial characterization of the resulting m formulations of polymer dispersions,
m being an integer greater than 1.

10. The process according to claim 9, wherein m is an integer greater than 10.

11. The process according to claim 9, wherein m is an integer greater than 100.

12. The process according to claim 9, wherein m is an integer greater than 1000.

## Revendications

1. Procédé pour la préparation d'une série de n dispersions polymères par une polymérisation en émulsion dans n charges réactionnelles parallèles comprenant les étapes
(a) préparation d'un mélange de monomères constitué par 0,5-20% en poids d'au moins un monomère hydrophile choisi dans le groupe constitué par l'acide acrylique, l'acide méthacrylique, l'acide maléique, l'acide fumarique, l'acide itaconique, l'acrylamide et le méthacrylamide, l'acide vinylsulfonique et leurs sels solubles dans l'eau et la N-vinylpyrrolidone, au moins 70% en poids d'au moins un monomère choisi dans le groupe constitué par le styrène, l'α-méthylstyrène, l'o-chlorostyrène, les vinyltoluènes, l'acétate de vinyle, le propionate de vinyle, le n-butyrate de vinyle, le laurate de vinyle, le stéarate de vinyle, l'ester méthylique, éthylique, n-butylique, isobutylique, 2-éthylhexylique de l'acide acrylique et méthacrylique, l'ester diméthylique de l'acide maléique, l'ester n-butylique de l'acide maléique, l'acrylonitrile, le 1,3-butadiène et l'isoprène et par 0,5-10% en poids d'au moins un monomère choisi dans le groupe formé par le N-méthylolacrylamide, le N-méthylolméthacrylamide, l'éthylèneglycolamide, le diacrylate d'éthylèneglycol, le diacrylate de 1,3-butylèneglycol, le diacrylate de 1,4-butylèneglycol, le diacrylate de propylèneglycol, le divinylbenzène, le méthacrylate de vinyle, l'acrylate de vinyle, le méthacrylate d'allyle, l'acrylate d'allyle, le maléate de dialkyle, le fumarate de dialkyle, le méthylènebisacrylamide, l'acrylate de cyclopentadiényle, le trialkylcyanurate, l'acrylate et le méthacrylate de n-hydroxyéthyle, de n-hydroxypropyle, de n-hydroxybutyle, le diacétonacrylamide, l'acrylate et le méthacrylate d'acétylacétoxyéthyle, la somme valant 100% en poids, un ou plusieurs initiateurs, un ou plusieurs dispersants, de l'eau comme mélange réactionnel et le cas échéant des agents de régulation qui diminuent la masse molaire et/ou des particules d'ensemencement et/ou des colorants et/ou d'autres composants, qui ne sont pas copolymérisés, en n sites de réaction séparés dans l'espace pour les n charges réactionnelles,
(b) réaction simultanée ou consécutive des trois monomères et le cas échéant des agents de régulation, qui diminuent la masse molaire et/ou des particules d'ensemencement et/ou d'autres composants qui ne sont pas copolymérisés, chacune des n charges réactionnelles se distinguant de chaque autre charge réactionnelle par au moins à chaque fois un paramètre de réaction, choisi dans le groupe constitué par le type et la quantité des monomères, des dispersants, des initiateurs et des autres composants appropriés utilisés, la quantité de mélange réactionnel, la température de réaction, la pression de réaction, le type de mélange et le type de réalisation de la réaction de polymérisation,
(c) caractérisation en parallèle et/ou en série des n dispersions polymères ainsi obtenues,
n étant un nombre entier supérieur à 1.

2. Procédé selon la revendication 1, **caractérisé en ce que** les sites de réaction séparés dans l'espace sont des creux dans une plaque de microtitrage ou des récipients en verre d'un système de synthèse en parallèle.

3. Procédé selon la revendication 1 ou 2, **caractérisé en ce que** la polymérisation en émulsion est une polymérisation en mini-émulsion.

4. Procédé selon l'une quelconque des revendications 1 à 3, **caractérisé en ce que** les charges réactionnelles sont mélangées par un mouvement d'agitation circulaire horizontal des récipients de réaction.

5. Procédé selon la revendication 4, **caractérisé en ce que** des tiges en verre sont introduites dans les récipients de réaction comme dispositifs d'interruption du flux.

6. Procédé selon l'une quelconque des revendications 1 à 5, **caractérisé en ce que** n est un nombre entier supérieur à 10.

7. Procédé selon l'une quelconque des revendications 1 à 5, **caractérisé en ce que** n est un nombre entier supérieur à 100.

8. Procédé selon l'une quelconque des revendications 1 à 5, **caractérisé en ce que** n est un nombre entier supérieur à 1000.

9. Procédé pour la préparation d'une série de m formulations de dispersions de polymères dans m charges parallèles, présentant les étapes
(a) préparation à chaque fois d'au moins une dispersion polymère aqueuse, obtenue par une polymérisation en émulsion telle que définie dans la revendication 1, en m sites séparés dans l'espace pour les m charges,
(b) préparation d'à chaque fois une autre dispersion polymère aqueuse et/ou de colorants et/ou de charges et/ou d'autres composants en chacun des m sites séparés dans l'espace,
(c) mélange des dispersions polymères aqueuses (a) avec les autres dispersions polymères aqueuses (b) et/ou les colorants et/ou les charges et/ou d'autres composants aux m sites séparés dans l'espace pour les m charges, chacune des m charges se distinguant de chaque autre charge réactionnelle par à chaque fois au moins un paramètre, choisi dans le groupe constitué par le type et la quantité des dispersions polymères aqueuses utilisées, la composition des dispersions polymères aqueuses utilisées et le type et la quantité des colorants utilisés et/ou des charges utilisées et/ou des autres composants appropriés,
(d) caractérisation en parallèle et/ou en série des m formulations de dispersions polymères ainsi obtenues,
m étant un nombre entier supérieur à 1.

10. Procédé selon la revendication 9, **caractérisé en ce que** m est un nombre entier supérieur à 10.

11. Procédé selon la revendication 9, **caractérisé en ce que** m est un nombre entier supérieur à 100.

12. Procédé selon la revendication 9, **caractérisé en ce que** m est un nombre entier supérieur à 1000.
